# EUROPÄISCHE PATENTANMELDUNG

(11) **EP 1 455 489 A2**
(43) Veröffentlichungstag der Anmeldung: **08.09.2004**
(21) Anmeldenummer: 03104821.8
(22) Anmeldetag: 19.12.2003
(51) Int. Cl.: H04L 12/56

(54) **Optimierung der Verkehrsbelastung in einem Kommunikationsnetz**

(30) Priorität: 19.02.2003 DE 10307005
(71) Anmelder: SIEMENS AKTIENGESELLSCHAFT, 80333 München (DE)
(72) Erfinder: Ryll, Frank, 13156 Berlin (DE)

(57) **Zusammenfassung**

Eine kosteneffektive und effiziente Möglichkeit zur Optimierung der Verkehrsbelastung in einem Kommunikationsnetz wird beschrieben durch das Verfahren und die Vorrichtung zur Optimierung der Verkehrsbelastung in einem Telekommunikations- und/oder Datennetz (3) mit einer Mehrzahl funktional im wesentlichen selbständiger Netzelemente, dadurch gekennzeichnet, dass abhängig von der Präsenz und Verfügbarkeit eines Nutzers eines Dienstes eine Freigabe für eine Datenübertragung erteilt wird.

## Beschreibung

Die Erfindung betrifft eine Vorrichtung und ein Verfahren zur Optimierung der Verkehrsbelastung in einem Kommunikationsnetz mit einer Mehrzahl funktional im wesentlichen selbständiger Netzelemente.

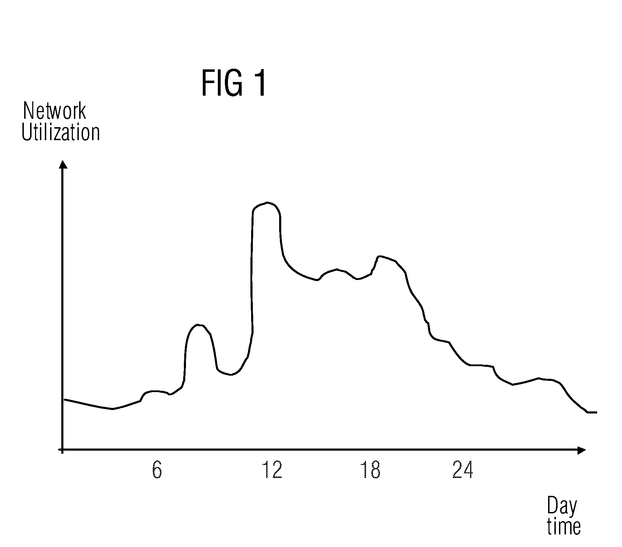

Herkömmliche Telekommunikations- bzw. Datennetze, gleich welcher Technologie/Verfahren (z.B. POTS, ISDN, CableTV, Breitbandinternet, GSM, PCS, PHS, CDMA, TDMA, UMTS; unabhängig von kanalgebundener oder paketorientierter Übertragung) weisen eine im Tagesverlauf stark schwankende Auslastung ihrer Verkehrskapazität auf. In den verkehrsschwachen Zeiten werden z. T. mehr als 90% der vorhandenen Kapazität nicht genutzt. Ein Beispiel für eine typische Netzauslastungskurve in Abhängigkeit von der Zeit zeigt Fig. 1.

Bisher wird diesem Umstand lediglich durch relativ schwach und undifferenziert wirkende nicht-technische (ökonomische) Mittel (z. B. Tarifgestaltung) abgeholfen, oder er wird als gegeben hingenommen. Sowohl im öffentlichen Festnetz (PSTN) als auch in den Mobilfunknetzen werden aus diesem Grund seit längerem spezielle Tarifstrukturen mit erheblichen Gebührendifferenzen zwischen verkehrsstarken und verkehrsschwachen Zeiten angeboten. Für das normale Telefonieren (d. h. Sprechverbindungen) lassen sich aufgrund der normalen Tagesrhythmen der meisten Menschen - im privaten Bereich - und angesichts üblicher Arbeitszeiten - im kommerziellen Bereich - Umschichtungen des Verkehrsaufkommens ohnehin nur bedingt verwirklichen. Auch spezielle Tarifstrukturen der Internetprovider, mit denen die Nutzung des öffentlichen Festnetzes als Datennetz zu verkehrsschwachen Zeiten für die Nutzer attraktiv gemacht werden soll, haben nur relativ kleine Nutzergruppen angesprochen und daher nur einen begrenzten Erfolg erzielt.

In dem Maße, wie die Netzressourcen der Kommunikations-Netze neben dem Telefonieren für zusätzliche - teilweise mit weitaus höherem Bandbreiten- und sonstigen Ressourcenbedarf verbundene - Dienste genutzt werden sollen, wird die Organisation einer möglichst gleichmäßig hohen Auslastung zunehmend wichtig. Ein Kommunikationsnetz kann ein Telekommunikationsnetz und/oder Datennetz sein. Einerseits begrenzt die Netzauslastung zu den Spitzenzeiten kapazitätsseitig das mögliche Angebot zusätzlicher (insbesondere ressourcenintensiver) Dienste, und zum anderen bestimmt die Auslastung der kostspieligen Infrastruktur natürlich in erheblichem Maße den Preis der über das Kommunikations-Netz angebotenen Dienste.

Es ist zu erwarten, dass es in den nächsten Jahren zu einer Optimierung der Netzauslastung durch den gezielten Einsatz von bestimmten Applikationen kommen wird. Dies können Applikationen sein, die spezifische Nutzungszeiten aufweisen (z. B. Erotika-Inhalte), nur zu bestimmten Zeiten zugänglich sind (z. B. Horoskope, Tagebuch-Applikationen) oder günstigere Tarife zu verkehrsarmen Zeiten ausnutzen (z. B. Fax-Versand in der Nacht). Diese Art der Optimierung ist, ebenso wie eine ökonomische Optimierung durch vergünstigte Nutzungspreise zu verkehrsschwachen Zeiten (z. B. in der Nacht), vermutlich durchaus zielführend.

Wenn die Möglichkeiten dieser Optimierung der Netzauslastung mittels gezielt nutzungszeitabhängig gestalteter Applikationen sowie spezieller Tarifstrukturen weitgehend ausgeschöpft sind, wird ein zunehmender Bedarf nach technischen Lösungen zur Erhöhung der mittleren Netzauslastung entstehen.

Der Erfindung liegt die Aufgabe zugrunde, eine Anordnung sowie ein Verfahren der gattungsgemäßen Art bereitzustellen, mit denen diesem Bedarf Rechnung getragen und eine zukunftssichere technische Lösung bereitgestellt werden kann, die einen wesentlichen Beitrag zu einer Erhöhung der mittleren Auslastung von TK- bzw. Datennetzen leistet.

Die Aufgabe wird erfindungsgemäß durch die Gegenstände der unabhängigen Patentansprüche gelöst. Weiterbildungen der Erfindung sind in den Unteransprüchen angegeben. Kern der Erfindung ist, dass abhängig von der Präsenz und der Verfügbarkeit eines Nutzers eines Dienstes eine Freigabe für eine Datenübertragung erteilt wird. Dies kann z. B. dadurch erfolgen, dass ein Präsenz-Server eines Telekommunikationsnetzes die Präsenz und Verfügbarkeit eines Nutzers eines Dienstes überprüft und das Ergebnis an eine Auswert- und Entscheidungseinheit weiterleitet. Die Auswertund Entscheidungseinheit erteilt weiteren Netzeinheiten eine Freigabe für die Datenübertragung nur dann, wenn ihr ein positives Prüfergebnis vorliegt. Dadurch werden Netzressourcen nicht unnötig belegt bzw. belastet. Die angegebene Anordnung und das vorgeschlagene Verfahren sind zu einer schnelleren und präziseren Steuerung der Netzauslastung geeignet. Durch diese schnellere und präzisere Form der Optimierung der Netzauslastung von Telekommunikationsnetzwerken können höhere Netzauslastungskoeffizienten erreicht werden, die ihrerseits zu einem erhöhten Return-on-Invest für die Netzwerkbetreiber führen. Damit ist das vorgeschlagene Verfahren geeignet, zu einem erheblich höheren Return-on-Invest beim Betrieb von Telekommunikationsnetzwerken (und gegebenenfalls niedrigeren Dienstpreisen für die Kunden) zu führen.

Die Erfindung wird anhand eines in den Figuren dargestellten Ausführungsbeispiels näher erläutert. Im Einzelnen zeigen
- Figur 1: Ein Beispiel für eine typische Netzauslastungskurve in Abhängigkeit von der Zeit,
- Figur 2: den Stand der Technik aus der Anmeldung der Siemens AG mit dem Aktenzeichen EP 02000122.8 anhand einer stark vereinfachte Telekommunikations-Netzstruktur,
- Figur 3: den Stand der Technik aus der Anmeldung der Siemens AG mit dem Aktenzeichen EP 02000122.8 anhand eines Funktions-Blockschaltbildes,
- Figur 4: ein Funktions-Blockschaltbild mit wesentlichen Komponenten einer bevorzugten Aufführungsform der erfindungsgemäßen Optimierungsanordnung.

Figur 1 zeigt ein Beispiel für eine typische Netzauslastungskurve in Abhängigkeit von der Zeit.

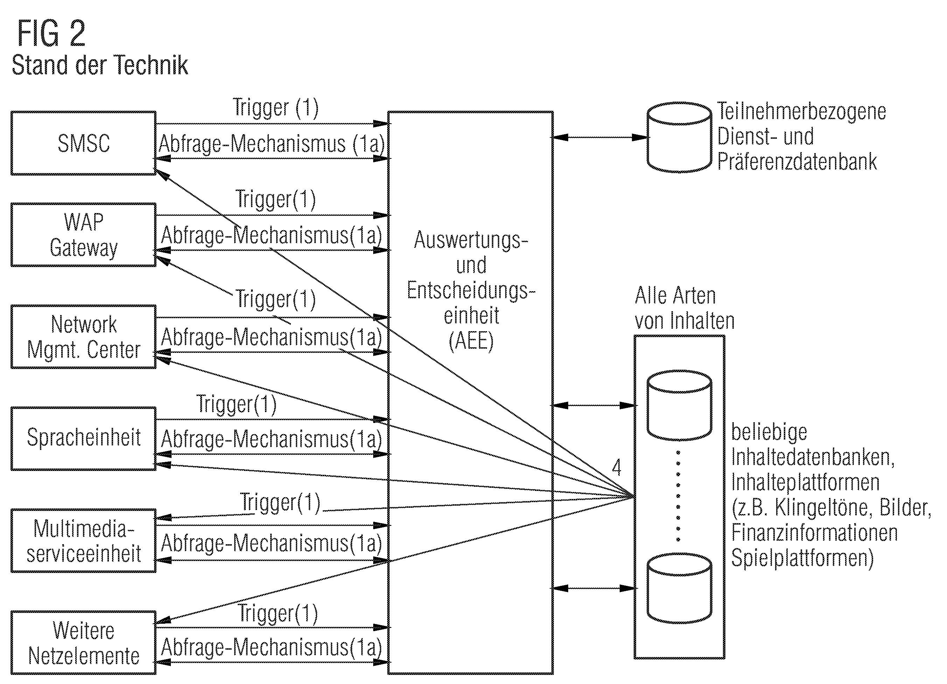

Figur 2 zeigt den Stand der Technik anhand einer stark vereinfachten Telekommunikations-Netzstruktur dargestellt. Die Figur ist aufgrund der Beschriftung im wesentlichen selbsterklärend, so dass nachfolgend keine geschlossene Beschreibung gegeben, sondern nur auf hervorhebenswerte Aspekte hingewiesen wird.

Alle relevanten Netzelemente (z.B. SMSC, WAP-Gateway, Multimedia-Serviceeinheit) sowie Netzkontroll- und Steuereinheiten (z.B. Network Management Center = NMC) senden entweder verkehrsabhängige Trigger (nachfolgend auch bezeichnet als "Lastnachrichten") an die Auswertungs- und Entscheidungseinheit AEE oder werden von der AEE über den Verkehrsstatus abgefragt.

In Abhängigkeit von der dienstspezifischen Verkehrslast wird die AEE nach der Auswertung der Dienste- und Teilnehmerdatenbanken solche Steuerinformationen an Inhaltedatenbanken bzw. -plattformen senden, die diese veranlassen, Informationen an die Nutzer solcher Dienste zu senden.

Wesentliche Aspekte des Verfahrens und der Anordnung sind:
- ein- oder mehrstufige Trigger, die durch verschiedene Netzelemente oder Netzüberwachungs- bzw. Netz-Steuereinheiten an die AEE geschickt werden,
- Schnittstellen an den Netzelementen, die das Abfragen des Verkehrsstatus durch die AEE zulassen.
- die AEE, die mit den Netzelementen oder Netzüberwachungs- bzw. Netz-Steuereinheiten und die weiterhin
- mit verschiedenen Datenbanken, z. B. Teilnehmer- und Inhaltedatenbanken oder -plattformen verbunden ist, um von diesen Einrichtungen Daten abzufragen und ereignissteuernde Informationen an diese zu senden.

Die AEE wird gesteuert durch dienstspezifische Algorithmen, die als Eingangsparameter die Uhrzeit und u. a. Daten aus den o. g. Datenbanken bzw. von den Plattformen erhält. Als Ergebnis der Bewertung dieser Parameter wird die AEE Steuerinformationen an die Datenbanken bzw. Plattformen senden, die diese veranlassen, Informationen an einen oder mehrere Dienstnutzer (Teilnehmer) zu senden, um bei diesen die weitere, unmittelbar folgende Dienstnutzung anzuregen. Es wird also im Zusammenwirken der AEE mit den Inhaltedatenbanken bzw. -plattformen die Auslastung niedrig belasteter Netzelemente durch selektive Inhalte-Übermittlung an die Nutzer unmittelbar oder über eine das Verkehrsaufkommen erhöhende Aktivität, die von den Nutzern ausgeht, mittelbar erhöht.

In einer ersten wichtigen Anwendung der vorgeschlagenen Anordnung und des entsprechenden Verfahrens umfasst das Kommunikationsnetz ein zellulares Mobilfunknetz, und als Netzelemente werden mindestens ein SMSC und/oder ein WAP-Gateway und/oder ein Network Management Center und/oder eine Spracheinheit und/oder eine Multimedia-Serviceeinheit hinsichtlich ihrer Auslastung überwacht und gesteuert. Eine perspektivisch nicht minder wichtige Anwendung betrifft Festnetze, insbesondere Breitband-, Schmalband- oder Telephoniekabelnetze, mit den relevanten Netzelementen Network Management Center und/oder Spracheinheit und/oder Multimedia-Service-Einheit und/oder Zugangspunkten für Telekommunikations- und Datendienste.

Sofern in einer weitestgehend universellen Lösung alle derzeit denkbaren Arten von Applikationen mit der im Stand der Technik vorgeschlagenen Lösung in den Kontext einer Optimierung der Netzauslastung eingebunden werden sollen, sind alle beschriebenen konstruktiven Merkmale notwendig. Die Optimierung kann jedoch auch nur für einige Applikationen durchgeführt werden (z. B. nur für Online-Spiele). Dies verringert den Implementierungsaufwand, da nur diese Applikationen Informationen von der Auswertungs- und Entscheideeinheit AEE erhalten müssen. Sollen nur einige Netzelemente in die Optimierung einbezogen werden, dann senden auch nur diese Einheiten Trigger an die AEE aus.

Das im Stand der Technik vorgeschlagene Verfahren ist der nicht-technischen (ökonomischen) Optimierung der Netzauslastung deutlich in Hinsicht auf
- Geschwindigkeit,
- Granularität der Steuerung (kleinere Auslastungslücken sind optimierbar),
- Adaptationsfähigkeit (Reaktion auf unvorhergesehene Ereignisse, schnelle Schwankungen der Netzlast, Teilausfall des Telekommunikationsnetzwerkes),
- Einbeziehung von Nutzerdaten (z. B. Erstnutzung der Applikation vs. spätere Nutzung),
- Return-on-Invest für den Netzwerkbetreiber und den Applikationsanbieter,
   überlegen. Es ermöglicht eine quasi-dynamische Steuerung, insbesondere Steigerung, der Verkehrsauslastung von Telekommunikationsnetzen.

Das Versenden der o. g. Informationen ist für den/die Betreiber kostenneutral möglich, da die dazu nötige Infrastruktur (Netzelemente, Kontroll- und Steuereinrichtungen etc.) bereits vorhanden ist und derzeit in der Regel einer unwirtschaftlich geringen Nutzung unterliegen.

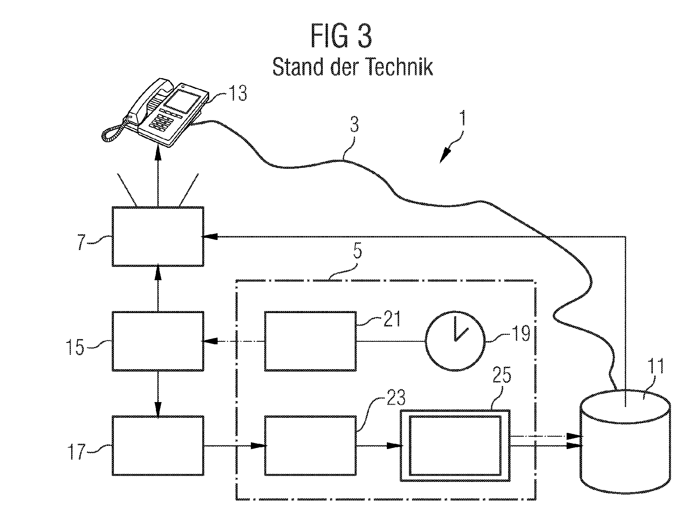

Figur 3 zeigt in Art eines Funktions-Blockschaltbildes wesentliche Komponenten einer bevorzugten Ausführungsform eine Anordnung aus der Anmeldung der Siemens AG mit dem Aktenzeichen EP 02000122.8 in einem Telekommunikations-Netz 3. Das Telekommunikations-Netz 3 hat eine zentrale Netzbetriebssteuereinheit 5, die - unter anderem - zur Steuerung einer möglichst hohen Netzauslastung ausgebildet ist (und deren Funktion hier auch nur insoweit beschrieben wird). Im dargestellten Beispiel kommuniziert die Netzbetriebssteuereinheit 5 mit einem Netzelement 7, um dessen Verkehrsbelastung zu erfassen, und einer Spieledatenbank 11, um Inhalte derselben mit einer in Abhängigkeit von der Netzauslastung eingestellten Datenrate einem Nutzer an einem Telekommunikations-Endgerät 13 anzubieten (In Wirklichkeit umfasst eine Netzstruktur, bei der die Anwendung der Erfindung sinnvoll ist, eine Mehrzahl von Netzelementen, an die eine Vielzahl von Telekommunikations-Endgeräten angeschlossen ist, und im Normalfall auch eine Mehrzahl von Inhaltedatenbanken oder - plattformen zur Bereitstellung von Information- oder Kommunikationsressourcen an die Telekommunikations-Endgeräte.).

Dem Netzelement 7 ist eine Verkehrsbelastungs-Überwachungs-Einheit 15 zur Erfassung der aktuellen Verkehrsbelastung zugeordnet, die ihrerseits mit einer Lastnachrichten-Sende-Einheit 17 zur Übermittlung einer die entsprechende Information beinhaltenden Lastnachricht an die Netzbetriebssteuereinheit 5 verbunden ist. Die Funktion der Verkehrsbelastungs-Überwachungseinheit 15 wird von der Netzbetriebssteuereinheit 5 aus gesteuert, die zu diesem Zweck einen Zeitgeber 19 und eine mit diesem verbundene Triggersignal-Sendeeinheit 21 zur Aussendung eines jeweils einen Erfassungsvorgang initiierenden Triggersignals aufweist. Die Lastnachricht gelangt in der Netzbetriebssteuereinheit zur einer Lastdaten-Empfangseinheit 23 und von dieser - in geeignet aufbereiteter Form - zu einer Auswertungs- und Entscheidungseinheit 25. Diese erzeugt im Ergebnis einer Auswertung gemäß einem vorbestimmten Algorithmus eine Steuernachricht, die an die Spieledatenbank 11 übermittelt wird und dort die Aussendung einer vorbestimmten Informationsnachricht an das Telekommunikations-Endgerät 13 über das Netzelement 7 ansteuert. Diese Informationsnachricht selbst oder ein durch sie initiierter, vom Nutzer des Endgerätes 13 ausgelöster Kommunikationsvorgang bewirken eine geeignete Steuerung der Netzlast am Netzelement 7 in Abhängigkeit von dessen aktuell festgestellter Belastung. Beispiele für solche Steuervorgänge werden nachfolgend skizziert.

In der Zukunft werden z. B. in einem UMTS-Netzwerk Spiele, Videos, Musik und Fotos übertragen werden. Durch das beschriebene Verfahren wird es möglich sein, viele dieser Applikationen auf Basis der Netzwerkauslastung
a) zu gestalten (siehe Beispiel unten),
b) zu aktivieren (z. B. Datenversand für ein weiteres Spiele-Level),
c) im Schwierigkeitsgrad oder der Darstellung anzupassen,
d) zu beenden oder einzuschränken.

Für Spiele ergeben sich folgende Möglichkeiten:
- Schwierigkeitsgrad wird durch Netzauslastung gesteuert,
- Bonusspiele werden durch Netzauslastung gesteuert,
- Aktionen in den Spielen werden durch Netzauslastung gesteuert (z. B. Gegner greift an),
- Spezielle Eigenschaften werden durch Netzauslastung gesteuert,
- SMS, die dem Fortgang des Spieles dienen, werden durch Netzauslastung gesteuert.

Für SMS ergeben sich folgende Möglichkeiten:
- Einladungen werden durch Netzauslastung gesteuert versendet,
- Werbung wird durch Netzauslastung gesteuert versendet,
- Einladung zum Spielen durch Netzauslastung gesteuert.

Für Mobile Commerce ergeben sich folgende Möglichkeiten:
- Gutscheine werden durch Netzauslastung gesteuert, versendet,
- Coupons werden durch Netzauslastung gesteuert, versendet.

Für Information/Infotainment ergibt sich z. B.:
- Horoskope werden durch Netzauslastung gesteuert versendet,
- Wetterberichte werden durch Netzauslastung gesteuert versendet.

### Beispielszenario 1:

Simulationsspiel im World Wide Web (WWW), das primär durch ein WWW-Interface (Webbrowser) und sekundär durch SMS (mobiler Anteil) vom Nutzer gesteuert wird. Das Simulationsspiel läuft kontinuierlich im WWW ab und kann SMS verschicken und empfangen.
Aufruf durch Endnutzer: Sonntag 21.45 Uhr, Zugang über Webbrowser.
Nutzer startet die Exploration von 3 fremden Planeten von einer Raumstation aus.
Aufruf durch Endnutzer: Montag 9.10 Uhr, Zugang über Webbrowser.
Nutzer startet die Besiedelung von zwei der drei fremden Planeten.
Aufruf durch netzlastabhängigen Trigger (Mobilfunknetz <20% Netzauslastung für SMS): Montag 11.45 Uhr, Versendung von SMS durch die Applikation. SMS-Inhalt: Auf einem der Planeten ereignete sich ein Erdbeben.
Montag 11.49 Uhr:
Nutzer versendet SMS/nutzt WAP-Zugang: Bergungsarbeiten einleiten.
Aufruf durch netzlastabhängigen Trigger (Mobilfunknetz <20% Netzauslastung für SMS): Montag 13.55 Uhr, Versendung von SMS durch die Applikation. SMS-Inhalt: Auf einem der Planeten ereignete sich erneut ein Erdbeben.
Montag 14.10 Uhr:
Nutzer versendet SMS/nutzt WAP-Zugang: Evakuierung des Planeten einleiten.
Aufruf durch Endnutzer: Montag 21.45 Uhr, Zugang über Webbrowser.
Nutzer siedelt alle Personen auf anderen Planeten um und startet neue Planetenexploration.

### Beispielszenario 2:

Autorennspiel, Übertragung via UMTS, Aufgabe: Steuerung eines Rennwagens.
Erster Aufruf durch Endnutzer: Sonntag 21.45 Uhr, 20% Netzauslastung.
AEE sendet entsprechende Trigger, speichert Nutzung.
Setting: Tag. Auflösung: hoch. Umgebung: Zuschauer sind zu sehen, animiert, die Haare der Zuschauer flattern im Wind. Zweiter Aufruf durch Endnutzer: Mittwoch 12.45 Uhr, 80% Netzauslastung.
AEE sendet entsprechende Trigger, speichert Nutzung.
Setting: Nebel. Auflösung: gering. Umgebung: Nur die Fahrbahn ist sichtbar, der Rest verschwimmt im Nebel.
Dritter Aufruf durch Endnutzer: Mittwoch 23.11 Uhr, 10% Netzauslastung. AEE sendet entsprechende Trigger, speichert Nutzung.
Setting: Tag. Auflösung: sehr hoch. Umgebung: Zuschauer, hohe Auflösung. Zusätzlich werden Bonusrunden vergeben.

Vierter Aufruf durch Endnutzer: Donnerstag 15.55 Uhr, 90% Netzauslastung.
AEE sendet entsprechende Trigger, speichert Nutzung.
Setting: Nacht. Auflösung: sehr niedrig. Umgebung: Nur die Lichtkegel des Autos sind zu sehen, der Rest verbleibt in schwarzer Nacht.

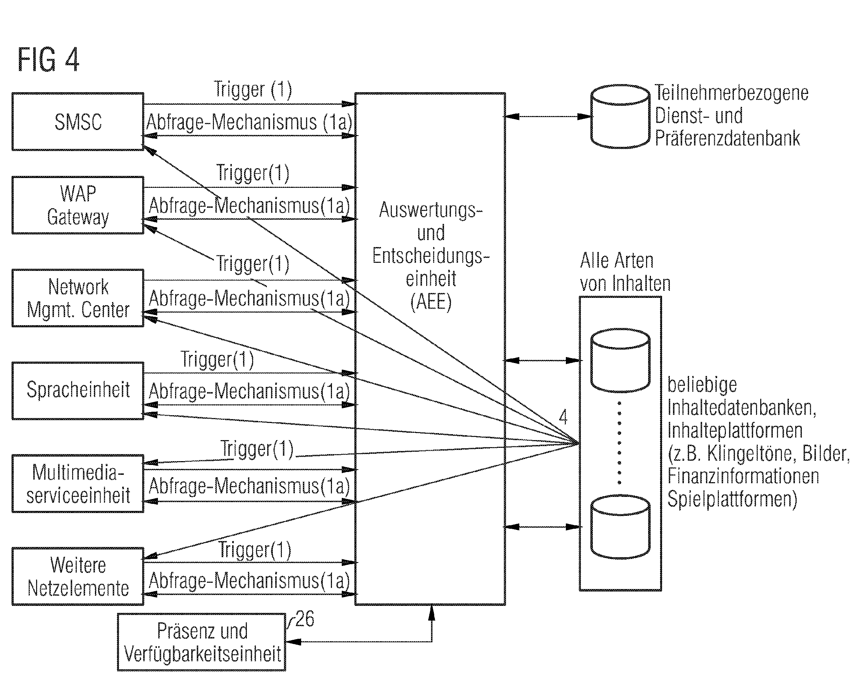

Figur 4 zeigt ein Funktions-Blockschaltbild mit wesentlichen Komponenten einer bevorzugten Aufführungsform der erfindungsgemäßen Optimierungsanordnung. Alle relevanten Netzelemente (z.B. SMSC, WAP-GW, Multimediaserviceeinheit) sowie Netzkontroll- und -steuereinheiten (z.B. Network Management Center, NMC) senden entweder verkehrsabhängige Trigger 1 an die Auswertungs- und Entscheidungseinheit (AEE) 25 oder werden von der AEE nach dem Verkehrstatus 1a abgefragt. In Abhängigkeit von der dienstspezifischen Verkehrslast, wird die AEE 25 nach der Auswertung der Dienste- und Teilnehmerdatenbanken solche Steuerinformationen an Inhaltedatenbanken und -plattformen senden, die diese veranlassen bei der Präsenz- und Verfügbarkeitseinheit (PVE) 26 abzufragen, in welcher der Dienstnutzer gegenwärtig präsent (technisch diese Daten empfangen kann) und verfügbar ist (grundsätzlich willens ist, diese Daten für sich zu nutzen). Nach dieser Feststellung werden die Informationen an die ermittelten Nutzer solcher Dienste gesendet. Dabei ist es ebenso möglich, dass diese Statusfeststellung bei der PVE 26 auch durch die AEE 25 vorgenommen werden kann. Die Auswertungs- und Entscheidungseinheit AEE 25 kommuniziert mit einer Präsenz- und Verfügbarkeitseinheit PVE 26 auf Basis von aus dem Telekommunikations-Netzwerk erhaltene Steuerdaten oder von Nutzern eingestellte Dienst-Nutzungsprofile, - vorlieben etc.. Eine Präsenz- und Verfügbarkeitseinheit PVE 26 kann z. B. ein IMS-Präsenz-Server in einem mobilen Telekommunikations-Netzwerk sein. Sollen z. B. 100.000 Coupons an Nutzer gesendet werden, die derzeitige Netzkapazität ermöglicht jedoch nur eine Adressierung von 80.000 Nutzer, dann können mit dem erfindungsgemäßen Verfahren und der Vorrichtung die präsenten und verfügbaren Nutzer ermittelt werden. Damit ist es möglich, die Netzbelastung zu minimieren, indem nur an die Nutzer ein Coupon gesandt wird, die auch präsent und verfügbar sind. Dies geschieht dadurch, das aufgrund von Netzinformationen bzw. Steuerdaten eine Präsenz- und Verfügbarkeitseinheit PVE 26 ermittelt, welche Nutzer präsent und verfügbar sind und das Prüfungsergebnis an die AEE übermittelt. Dort erfolgt eine Freigabe für die Datenübertragung anderer Netzeinheiten nur für die, z. B. derzeit 51.287, präsenten und verfügbaren Nutzer. Dabei ist sichergestellt, das diese Daten den betreffenden Nutzer erreichen.

## Patentansprüche

1. Verfahren zur Optimierung der Verkehrsbelastung in einem Kommunikationsnetz (3) mit einer Mehrzahl funktional im wesentlichen selbständiger Netzelemente,
**dadurch gekennzeichnet,**
**dass** abhängig von der Präsenz und Verfügbarkeit eines Nutzers eines Dienstes eine Freigabe für eine Datenübertragung erteilt wird.

2. Verfahren nach Anspruch 1
**dadurch gekennzeichnet,**
**dass** die Präsenz und Verfügbarkeit eines Nutzers eines Dienstes mit einem Präsenz-Server überprüft wird.

3. Verfahren nach einem der vorhergehenden Ansprüche,
**dadurch gekennzeichnet,**
**dass** für die Überprüfung der Präsenz und Verfügbarkeit eines Nutzers eines Dienstes Steuerdaten in einem Telekommunikationsnetz verwendet werden.

4. Verfahren nach einem der vorhergehenden Ansprüche,
**dadurch gekennzeichnet,**
**dass** für die Überprüfung der Präsenz und Verfügbarkeit eines Nutzers eines Dienstes mindestens ein Profildaten enthaltendendes Dienst-Nutzungsprofil verwendet wird.

5. Verfahren nach einem der vorhergehenden Ansprüche,
**dadurch gekennzeichnet,**
**dass** abhängig von einem positiven Prüfergebnis eine Datenübertragung an einen Nutzer eines Dienstes von einer Auswertungs- und Entscheidungseinheit (25) freigegeben wird.

6. Verfahren nach einem der vorhergehenden Ansprüche,
**dadurch gekennzeichnet,**
**dass** bei mindestens einem Netzelement die aktuelle Verkehrsbelastung erfasst wird,
**dass** aufgrund von Zeitgebersignalen, externer Triggersignalen oder eines Ergebnisses eines Vergleiches mit vorprogrammierten Schwellwerten Lastnachrichten zur Signalisierung der Verkehrsbelastung erstellt und an eine Netzbetriebssteuereinheit gesandt werden,
**dass** die Lastnachrichten von einer Netzbetriebssteuereinheit empfangen und ausgewertet werden und
**dass** Steuersignale an ausgewählte Inhaltedatenbanken oder - plattformen betreffend die Aussendung vorbestimmter Inhalte oder anderer Information an mit ausgewählten Netzelementen verbundene Telekommunikations- bzw. Datenendgeräte von Nutzern in Relation zu den ausgewerteten Lastnachrichten erzeugt werden.

7. Verfahren nach Anspruch 6,
**dadurch gekennzeichnet,**
**dass** von der Netzbetriebssteuereinheit Triggersignale an die Netzelemente zur Generierung und/oder Übermittlung von Lastnachrichten ausgesandt werden.

8. Verfahren nach den Ansprüchen 6 bis 7,
**dadurch gekennzeichnet,**
**dass** bei den Netzelementen Schwellwerte betreffend die Verkehrsbelastung programmiert werden, die zu einem die Aussendung von Lastnachrichten auslösenden Vergleich benutzt werden.

9. Verfahren nach den Ansprüchen 6 bis 8,
**dadurch gekennzeichnet,**
**dass** die Ausgabe von Steuersignalen an ausgewählte Inhaltedatenbanken oder -plattformen in Relation von mindestens einem vorgespeicherten Profildaten enthaltendenden Dienst-Nutzungsprofil der Nutzer erfolgt.

10. Vorrichtung zur Optimierung der Verkehrsbelastung in einem Kommunikationsnetz (3) mit einer Mehrzahl funktional im wesentlichen selbständiger Netzelemente,
- mit einer ersten Einheit (26), die derart ausgestaltet ist, dass sie überprüft, ob ein Nutzer eines Dienstes präsent und verfügbar ist und das Prüfungsergebnis einer zweiten Einheit weiterleitet, wobei die zweite Einheit derart ausgestaltet ist, dass sie eine Auswertung des Prüfungsergebnisses durchführt und bei positiven Prüfergebnis eine Entscheidung zur Freigabe einer Datenübertragung an einen präsenten und verfügbaren Nutzer eines Dienstes trifft.

11. Vorrichtung nach Anspruch 10
**dadurch gekennzeichnet,**
**dass** die zweite Einheit (25) als Auswertungs- und Entscheidungseinheit ausgestaltet ist.

12. Vorrichtung nach einem der vorhergehenden Ansprüche,
**dadurch gekennzeichnet,**
**dass** die erste Einheit (26) Daten zur Überprüfung von anderen Netzeinheiten erhält.

13. Vorrichtung nach einem der vorhergehenden Ansprüche,
**dadurch gekennzeichnet,**
**dass** die erste Einheit (26) als Präsenz-Server ausgestaltet ist.

14. Vorrichtung nach einem der vorhergehenden Ansprüche,
**dadurch gekennzeichnet,**
**dass** in einer Netzbetriebssteuereinheit (5) zum Empfang von Lastnachrichten mindestens eines Teils der Netzelemente eine mit einer Auswertungs- und Entscheidungseinheit (25) zur Auswertung der Lastnachrichten und zur Ausgabe von Steuersignalen in Relation vom Nachrichteninhalt an ausgewählte Inhaltedatenbanken oder -plattformen verbundene Lastdaten-Empfangseinheit (23) vorgesehen ist.

15. Vorrichtung nach einem der vorhergehenden Ansprüche,
**dadurch gekennzeichnet,**
**dass** die Inhaltedatenbanken (11) und/oder -plattformen zum Ansprechen auf die Steuersignale zur Aussendung vorbestimmter Inhalte oder anderer Information an mit ausgewählten Netzelementen verbundene Telekommunikations- oder Datenendgeräte von Nutzern ausgebildet sind.

16. Vorrichtung nach einem der vorhergehenden Ansprüche,
**dadurch gekennzeichnet,**
**dass** für die Verkehrsbelastungs-Überwachungseinheiten (15) oder für die Lastnachrichten-Sendeeinheiten (17) der Netzelemente (7) Zeitgeber zum Ansteuern einer Erfassung der Verkehrsbelastung und/oder die Aussendung einer Lastnachricht an die Netzbetriebssteuereinheit zu vorbestimmten Zeitpunkten oder in vorbestimmten Zeitintervallen vorgesehen sind.

17. Vorrichtung nach einem der vorhergehenden Ansprüche,
**dadurch gekennzeichnet,**
**dass** für mindestens einen Teil der Netzelemente Verkehrsbelastungs-Überwachungseinheiten (15) und mit diesen verbundene Last-Nachrichten-Sendeeinheiten (17) zur Übermittlung von die Verkehrsbelastung des jeweiligen Netzelementes signalisierenden Lastnachrichten an die Netzbetriebssteuereinheit vorgesehen sind.

18. Vorrichtung nach Anspruch 17,
**dadurch gekennzeichnet,**
**dass** die Verkehrsbelastungs-Überwachungseinheiten (15) Diskriminatoreinheiten aufweisen, die derart ausgestaltet sind, dass sie kontinuierlich eine erfasste Verkehrsbelastung mit Schwellwerten vergleichen und die Aussendung einer Lastnachricht bei Über- und/oder Unterschreitung dieser Schwellwerte ansteuern.

19. Vorrichtung nach einem der vorhergehenden Ansprüche,
**dadurch gekennzeichnet,**
**dass** für eine Abfrage von Lastnachrichten bei den Verkehrsbelastungs-Überwachungseinheiten (15) in einer Auswertungs- und Entscheidungseinheit (25) der Netzbetriebssteuereinheit ein Zeitgeber (19) und ein Triggerimpulssender (21) zum Generieren und Aussenden von Triggerimpulsen vorgesehen sind.
